# EUROPÄISCHE PATENTANMELDUNG

(11) **EP 3 078 934 A1**
(43) Veröffentlichungstag der Anmeldung: **12.10.2016**
(21) Anmeldenummer: 16156950.4
(22) Anmeldetag: 23.02.2016
(51) Int. Cl.: G01C 15/00, G01S 5/16, G01S 19/51, G01S 5/02, G01S 13/87, G01S 5/14

(54) **VERMESSUNGSSYSTEM UND VERMESSUNGSVERFAHREN**

(30) Priorität: 10.04.2015 DE 102015206432
(71) Anmelder: MTS Maschinentechnik Schrode AG, 72534 Hayingen (DE)
(72) Erfinder: NOHLEN, Ulrike, 72531 Hohenstein (DE); GOEBEL, Bernd, 72525 Münsingen-Dottingen (DE); SCHRODE, Rainer, 88529 Zwiefalten (DE)
(74) Vertreter: DREISS Patentanwälte PartG mbB

(57) **Zusammenfassung**

Verfahren und Vorrichtung zum Erstellen eines Baustellen-Lokalisierungssystems mittels eines Vermessungssystems (100), umfassend folgende Schritte:
Betreiben einer ersten Messeinrichtung (121) und einer zweiten Messeinrichtung (122) in einem ersten Betriebsmodus, und Betreiben einer dritten Messeinrichtung (123) in einem zweiten Betriebsmodus;
Empfang von Information über eine erste Position (x1) der ersten Messeinrichtung (121);
Empfang von Information über eine zweite Position (x2) der zweiten Messeinrichtung (122), wobei die erste Position (x1) und die zweite Position (x2) voneinander um einen ersten Abstand (a1) beabstandet sind;
Empfangen von Information über eine dritte Position (x3) der dritten Messeinrichtung (123), wobei die dritte Position (x3) und die erste Position (x1) voneinander um einen zweiten Abstand (a2) beabstandet sind, und die dritte Position (x3) und die zweite Position (x2) voneinander um einen dritten Abstand (a3) beabstandet sind;
Ermitteln des zweiten Abstands (a2) und Ermitteln des dritten Abstands (a3) unter Berücksichtigung der empfangenen Information;
Ermitteln der dritten Position (x3) unter Berücksichtigung des ermittelten zweiten Abstands (a2) und des ermittelten dritten Abstands (a3) und der ersten Position (x1) als Festpunkt und der zweiten Position (x2) als Festpunkt.

## Beschreibung

Die Erfindung betrifft ein Vermessungssystem und ein Vermessungsverfahren.

### Stand der Technik

Lokalisierungssysteme arbeiten mit im Raum verteilten Empfängern oder Reflektoren, deren Standort als Festposition bekannt ist. Sie empfangen die Signale eines Mobilen Senders und berechnen dessen Position aus den empfangenen Signalen beispielsweise mittels Auswertung der Laufzeiten, Feldstärke, Winkeln. Unter anderem werden solche Lokalisierungssysteme für Fußballortung, Wireless Local Area Network Ortung, Telefonortung und Tachymetermessung, insbesondere für Baustellen, verwendet.

Andere Lokalisierungssysteme arbeiten mit im Raum verteilten Sendern, deren Standort als Festposition bekannt ist. Der mobile Empfänger, berechnet seine eigene Position aus den empfangenen Signalen beispielsweise mittels Auswertung der Laufzeiten, Feldstärke, Winkeln. Weiter Beispiele für Systeme die zur Bestimmung der eigenen Position verwendet werden können sind: Globales Navigationssatellitensystem (GNSS), Long Range Navigation (LORAN) oder Rundumlaser.

In oben genannten Fällen muss die genaue Lage der ortsfesten Sender oder Empfänger, also die Festposition, durch eine übergeordnete Einmessung ermittelt werden. Beispielsweise wird dazu eine tachymetrische Einmessung, eine Feldstärken-kartierung oder die Positionsbestimmung der Satelliten über ground stations verwendet.

Bei einer GNSS Messung muss die Position der beteiligten Satelliten im Moment der Berechnung als Festposition bekannt sein.

Bei tachymetrischer Vermessung wird ein Tachymeter zunächst zur Bestimmung der Position des Tachymeters bezüglich eines Festpunktes verwendet. Anschließend wird das Tachymeter durch einen Spiegel an der neu vermessenen Position ersetzt

### Offenbarung der Erfindung

Die erfindungsgemäße Vorrichtung und das erfindungsgemäße Verfahren nach den Merkmalen der unabhängigen Ansprüche haben den Vorteil, dass insbesondere auf Baustellen ein Lokalisierungssystem ohne weitere externe Raumbezüge vollständig aufgebaut werden kann.

Im Gegensatz zur GNSS Messung ist die Berechnung mittels der erfindungsgemäßen Vorrichtung bzw. des Verfahrens auch mit Sender- / Empfängereinheiten möglich, indem diese einfach entsprechend ihrer Position als Festpunktgerät oder Rover konfiguriert werden.

Im Gegensatz zur tachymetrischen Vermessung ist aufgrund der erfindungsgemäßen Vorrichtung bzw. des Verfahrens kein Austausch des Tachymeters durch den Spiegel erforderlich. Die Auswerteeinrichtung, beispielsweise ein zentraler Computer, wird dazu nicht auf die Position der jeweils zu vermessenden Punkte gesetzt, sondern es werden jeweils nur die Sender- / Empfängereinheiten bewegt, bis sie als Festpunktgerät konfiguriert werden.

Ausführungsformen der Erfindung sind in den Zeichnungen dargestellt und in der nachfolgenden Beschreibung näher erläutert.

### Es zeigen

Figur 1 schematisch einen Teil eines Vermessungssystems,
Figur 2 schematisch eine Auswerteeinrichtung,
Figur 3 ein Flussdiagram mit Teilen eines Vermessungsverfahrens.

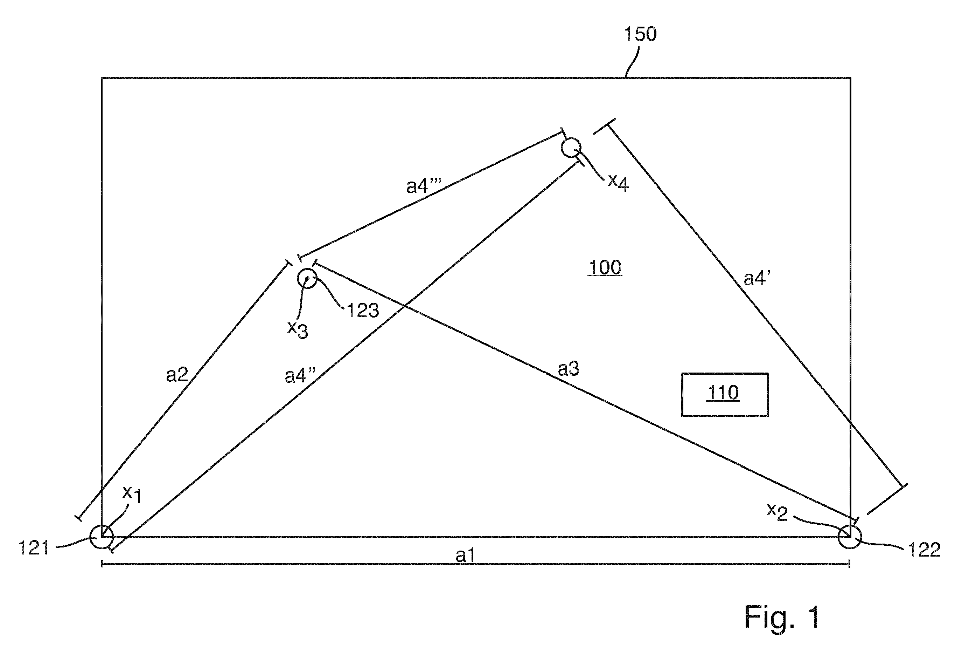

Figur 1 zeigt schematisch einen Teil eines Vermessungssystems 100.

Das Vermessungssystem 100 umfasst im Beispiel eine Auswerteeinrichtung 110, eine erste Messeinrichtung 121, eine zweite Messeinrichtung 122, eine dritte Messeinrichtung 123 und mindestens eine weitere Messeinrichtung 124.

Die Messeinrichtungen sind im Beispiel Sender- / Empfängereinheiten. Diese sind im Beispiel in einem ersten Betriebsmodus als Festpunktgerät und in einem zweiten Betriebsmodus als Rover konfigurierbar und werden im Folgenden je nach ihrer Konfiguration Festpunktgerät bzw. Rover genannt. Die Konfiguration erfolgt beispielsweise durch einen an der Messeinrichtung angeordneten Schalter mit zwei Schalterstellungen, durch den die Messeinrichtung in den ersten Betriebsmodus als Festpunktgerät oder den zweiten Betriebsmodus als Rover geschaltet wird. Es können auch als Festpunktgerät bzw. Rover vorkonfigurierte Messeinrichtungen vorgesehen sein.
Die Sender und Empfänger der Messeinrichtungen sind ausgebildet um mittels eines vorbestimmten Protokolls Signale bzw. Daten mit Sendern und Empfängern anderer Messeinrichtungen auszutauschen und Laufzeitsignale zu senden.

Die Messeinrichtungen sind beispielsweise ausgebildet eine Laufzeitmessung beispielsweise zur Feststellung der Zeitdifferenz zwischen Senden und Empfangen eines Signals mittels Ultra-Breitband-Technologie, UWB, Radar oder Lidar auszuführen. Beispielsweise ist jeder Messeinrichtung eine vorgegebene Identifikation zugeordnet. Diese ist beispielsweise nummerisch oder alphanummerisch. Die durch die Laufzeitmessung ermittelte Zeit, die das Signal für das Durchlaufen einer durch die Position zweier Messeinrichtungen begrenzte Messstrecke benötigt, wird beispielsweise in einen entsprechenden Abstand umgerechnet und durch ein Tripel umfassend die Identifikation der beiden Messeinrichtungen und den ermittelten Abstand ,angegeben. Die Messeinrichtungen sind ausgebildet Information über die Zeit und die Messstrecke, beispielsweise das Tripel, auszutauschen.

Vorzugsweise ist in der Messeinrichtung auch ein Empfänger für Signale eines globalen Satellitennavigationssystems, beispielsweise ein GPS-sensor vorgesehen. In diesem Fall ist die Messeinrichtung ausgebildet ihre absolute Position bezüglich des Koordinatensystems des globalen Satellitennavigationssystems zu bestimmen. In diesem Falle ist die Messeinrichtung dazu ausgebildet Information über ihre absolute Position beispielsweise durch ein Tupel der absoluten Position und der Identifikation der Messeinrichtung zu versenden.

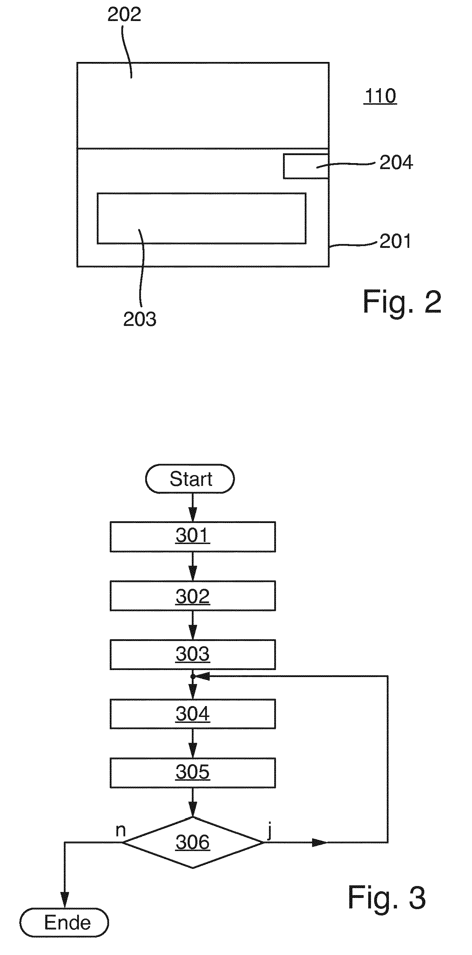

Die Auswerteeinrichtung 110 wird im Folgenden anhand der Figur 2 beschrieben.

Die Auswerteinheit 110 ist im Beispiel eine Recheneinrichtung 201, beispielsweise ein Tablet, ein Personal Computer oder Laptop. Die Recheneinrichtung 201 umfasst einen Prozessor, einen nichtflüchtigen Speicher, beispielsweise eine Festplatte, und einen Arbeitsspeicher. Diese sind nicht dargestellt. Die Recheneinrichtung 201 umfasst zudem eine Ausgabeeinrichtung 202, beispielsweise einen Bildschirm, eine Eingabeeinrichtung 203, beispielsweise eine Tastatur, und einen Empfänger 204.

Alternativ dazu kann der Empfänger 204 auch außerhalb der Ausgabeeinrichtung 202 angeordnet sein. In diesem Fall können Auswerteeinrichtung 202 und Empfänger 204 ausgebildet sein um Daten über eine Kabelgebundene oder Kabellose Datenverbindung auszutauschen. Daten könne beispielsweise im Global Positioning System Fix Data (GGA) Format über eine kabellose Verbindung ausgetauscht werden. Ein weiteres geeignetes Protokoll zum Austausch der Daten ist beispielsweise im National Marine Electronics Association Standard definiert. Beispielsweise wird eine ZIGBEE oder Bluetooth Verbindung oder eine Verbindung nach einem der Standards aus der Familie IEEE 802.11 verwendet.

Ein auf der Recheneinrichtung 201 ablaufendes Betriebssystem, beispielsweise Windows 8, ist dazu ausgebildet Programmcode, der auf dem nichtflüchtigen Speicher abgespeichert ist auszuführen. Der Programmcode ermöglicht Benutzereingaben und Benutzerausgaben gemäß des im Folgenden beschriebenen Verfahrens.

Der Empfänger 204 ist ausgebildet von Messeinrichtungen gesendete Signale, beispielsweise die Information über die Zeit und die Messstrecke, also beispielsweise das Tripel zu empfangen. Der Empfänger 204 kann ausgebildet sein, die Information über die absolute Position, also beispielsweise das Tupel, zu empfangen und/oder die jeweilige absolute Position aus empfangenen Signalen zu errechnen.

Die Verbindung zwischen den Messeinrichtungen untereinander ist beispielsweise eine UWB, Radar oder Lidar Verbindung. Die Verbindung der Messeinrichtungen mit dem Empfänger 204 ist vorzugsweise drahtlos. Beispielsweise wird eine UWB, Radar oder Lidar Verbindung verwendet. Eine ZIGBEE oder Bluetooth Verbindung oder eine Verbindung nach einem der Standards der IEEE 802.11 Familie kann auch verwendet werden.

Der Programmcode ist ausgebildet, eine, der tatsächlichen Position der Messeinrichtungen relativ zueinander entsprechende Darstellung mittels symbolischer Messeinrichtungen auf der Ausgabeeinrichtung 202, beispielsweise dem Bildschirm, auszugeben. Relativposition bedeutet dabei, dass die realen Abstände zwischen den Messeinrichtungen, beispielsweise nach vorgegebenem Maßstab, durch den Abstände der symbolisch dargestellten Messeinrichtungen wiedergegeben werden.

Der Programmcode ist ausgebildet eine vorbestimmte Graphik, beispielsweise eine kartographische Darstellung insbesondere einer Baustelle 150, vom nichtflüchtigen Speicher zu laden und Anzuzeigen. Dazu ist ein Koordinatensystem, beispielsweise ein kartesisches Koordinatensystem, zur Beschreibung der Position von Punkten innerhalb der kartographischen Darstellung vorgesehen. Die Position der Darstellung der symbolischen Messeinrichtungen ist beispielsweise in einer Datenstruktur Abgelegt, die die Koordinaten und eine Identifikation der Darstellung der jeweiligen symbolischen Messeinrichtung enthält.

Zudem ermöglicht der Programmcode die Konfigurierung jeder Darstellung einer symbolischen Messeinrichtung als Festpunktgerät oder als Rover. Dazu ist jeder Messeinrichtung, beispielsweise in der jeweiligen Datenstruktur, eine Parameter zugeordnet. Die Darstellung wird beispielsweise abhängig vom Parameter geändert. Zum Beispiel werden Rover und Festpunktgeräte abhängig vom Parameter farblich unterschiedlich auf einem Bildschirm des Tablet dargestellt.
Der Empfänger 204 ist ausgebildet Information über die Position der Messeinrichtungen zu empfangen. Diese Information wird durch die Auswerteeinrichtung 110 wie im Folgenden Beschrieben ausgewertet und angezeigt.

Im Beispiel enthalten die Signale beispielsweise das Tripel und oder das Tupel. Das heißt die Auswerteeinrichtung 110 empfängt Information über den Abstand und eine Identifikation der Messeinrichtungen, die den Abstand einschließen. Alternativ oder zusätzlich kann die Zeit und die Messstrecke und/oder Information über die absolute Position enthalten sein.

Die Auswerteeinrichtung 110 ist ausgebildet mittels dieser empfangenen Information einer ersten Messeinrichtung 121 eine erste Position x1 auf der vorbestimmten Graphik, d.h. auf der kartographischen Darstellung der Baustelle 150 zuzuordnen.

Dadurch wird abgebildet, dass sich die erste Messeinrichtung 121 an einer ersten Position auf der Baustelle 150 befindet.

Die Auswerteeinrichtung 110 ist ausgebildet mittels dieser empfangenen Information einer zweiten Messeinrichtung 122 eine zweite Position x2 auf der vorbestimmten Graphik, d.h. auf der kartographischen Darstellung der Baustelle 150, zuzuordnen.

Die Auswerteeinrichtung 110 ist ausgebildet mittels dieser empfangenen Information einer dritten Messeinrichtung 123 eine dritte Position x3 auf der vorbestimmten Graphik, d.h. auf der kartographischen Darstellung der Baustelle 150, zuzuordnen.

Die Auswerteeinrichtung 110 ist ausgebildet mittels dieser empfangenen Information mindestens einer weiteren Messeinrichtung 124 eine weitere Position x4 auf der vorbestimmten Graphik, d.h. auf der kartographischen Darstellung der Baustelle 150 zuzuordnen.

Dadurch wird abgebildet, dass sich die jeweilige Messeinrichtung an einer jeweiligen tatsächlichen Position auf der Baustelle 150 befindet.

Die Messeinrichtung, im Beispiel die Festpunktgeräte und der Rover, werden dazu beispielsweise von Benutzern an die jeweilige tatsächliche Position bewegt, als Festpunktgerät oder Rover konfiguriert und aktiviert.

Die Konfiguration der Darstellung der Messeinrichtungen als Festpunktgerät oder Rover erfolgt beispielsweise durch Setzen eines der Messeinrichtung zugeordneten Parameters auf einen dieser Konfiguration zugeordneten vorbestimmten Wert.

Beispielsweise erfolgt eine Benutzereingabe um den Parameter zu setzen. Alternativ ist kann vorgesehen sein, dass von der Messeinrichtung Information zum setzten des Parameters empfangen wird. In diesem Fall wird der Parameter zur Konfiguration als Festpunktgerät oder Rover abhängig von der empfangenen Information gesetzt.

Die Auswerteeinrichtung 110 ist ausgebildet die aktuelle Konfiguration jeder Darstellung einer symbolischen Messeinrichtung als Festpunktgerät oder als Rover in dem der jeweiligen Messeinrichtung zugeordneten Parameter zu speichern

Die erste Position x1 und die zweite Position x2 sind voneinander um einen ersten Abstand a1 beabstandet, der einem ersten tatsächlichen Abstand auf der Baustelle 150 entspricht. Die dritte Position x3 und die erste Position sind dabei voneinander um einen zweiten Abstand a2 beabstandet, und die dritte Position x3 und die zweite Position x2 sind dabei voneinander um einen dritten Abstand a3 beabstandet. Der zweite und der dritte Abstand entsprechen einem zweiten tatsächlichen Abstand und einem dritten tatsächlichen Abstand auf der Baustelle 150. Die weitere Position x4 ist von der ersten, der zweiten und der dritten Position durch weitere Abstände beabstandet, die weiteren tatsächlichen Abständen entsprechen.

Die Auswerteeinrichtung 110 ist vorteilhafterweise ausgebildet die absoluten Positionen der ersten, der zweiten und der dritten Messeinrichtung zu speichern.

Die Auswerteeinrichtung 110 oder der Empfänger 204 ist ausgebildet die Abstände, insbesondere unter Berücksichtigung der empfangenen Information zu ermitteln. Im Beispiel wird der Abstand von den Messeinrichtungen aus Laufzeitsignalen bezogen auf den jeweiligen Abstand ermittelt und als Information, beispielsweise im Tripel, gesendet.

Alternativ kann die Auswerteeinrichtung 110 ausgebildet sein, den ersten Abstand a1 zu erfassen. Dazu kann Programmcode vorgesehen sein, der eine Benutzereingabe auf der Eingabeeinrichtung 203, beispielsweise der Tastatur, als Eingabe des ersten Abstand a1 erkennt. Beispielsweise kann vorgesehen sein, den ersten Abstand a1 als Zahlenwert der gemäß dem Maßstab der kartographischen Darstellung dem ersten Abstand a1 in der Realität in Metern entspricht einzugeben.

Vorteilhafterweise ist die Auswerteeinrichtung 110 ausgebildet, die Abstände, beispielsweise im nichtflüchtigen Speicher, zu speichern.

Die Auswerteeinrichtung 110 ist zudem ausgebildet, mindestens eine weitere Position x4 eines Rovers durch zu ermitteln. Vorteilhafterweise wird die vierte Position x4 unter Berücksichtigung des ermittelten ersten Abstands a1, des ermittelten zweiten Abstands a2 und des ermittelten dritten Abstands a3, der ersten Position x1 als Festpunkt und der zweiten Position x2 als Festpunkt und der dritten Position x3 als Festpunkt zu ermitteln.

Es kann vorgesehen sein, nur zwei der Messeinrichtungen als Festpunktgeräte konfiguriert zu betreiben. In diesem Fall kann vorgesehen sein, die dritte Position x3 der dritte Messeinrichtung 123, die als Rover konfiguriert betrieben wird, zu bestimmen. Dazu wird die dritte Position x3 unter Berücksichtigung des ermittelten zweiten Abstands a2 und des ermittelten dritten Abstands a3, der ersten Position x1 als Festpunkt und der zweiten Position x2 als Festpunkt, ermittelt. Zusätzlich kann in diesem Falle vorgesehen sein, Information über eine Messung von Höhenunterschieden zwischen diesen Festpunktgeräten und dem Rover zu erfassen und bei der Bestimmung der dritten Position x3 zu berücksichtigen.

Vorzugsweise wird die weitere Position x4 unter Berücksichtigung der dritten Position x3 als Festpunkt in weiteren Abständen zur weiteren Position x4 ermittelt.

Es kann dazu vorgesehen sein, die dritte Messeinrichtung 123 an der dritten Position x3 zunächst zur Bestimmung der dritten Position x3 als Rover und zur Bestimmung der weiteren Messeinrichtung 124 an der weiteren Position x4 als Festpunktgerät konfiguriert zu betreiben.

Vorzugsweise ist die Auswerteeinrichtung 110 ausgebildet, die weitere Position x4 unter Berücksichtigung mindestens dreier Festpositionen zu ermitteln.

Vorzugsweise ist die Auswerteeinrichtung 110 ausgebildet, die absolute Position mittels Information über die empfangenen Satellitensignale zu ermitteln. Insbesondere wird dazu das Global Positioning System verwendet. Die Signale werden von den Messeinrichtungen empfangen und als die Information über die Position weitergeleitet. Alternativ kann zunächst die jeweilige Messeinrichtung ihre Position selbst aus den Satellitensignalen bestimmen und diese weiterleiten. Sofern in Häuserschluchten ein GPS Empfang möglich ist, kann so einen Anbindung an das externe Koordinatensystem erfolgen.

Vorzugsweise ist die Auswerteeinrichtung 110 ausgebildet, die Genauigkeit einer ermittelten Position durch Ringschlussmessung, insbesondere zur ersten Position x1, zu überprüfen.

Vorzugsweise ist die Auswerteeinrichtung 110 ausgebildet, eine Ausgleichsrechnung zur Ermittlung mindestens einer Position durchzuführen.

Die Auswerteeinrichtung 110 ist zudem ausgebildet, bei der Ermittlung der Positionen die aktuelle Konfiguration jeder Darstellung eines symbolischen Messeinrichtung als Festpunktgerät oder als Rover zu berücksichtigen. Dazu ist Programmcode vorgesehen, der auf den dem jeweiligen Messeinrichtung zugeordneten, beispielsweise in der jeweiligen Datenstruktur abgelegten, Parameter zugreift. Die Position einer als Rover konfigurierten Messeinrichtung, wird dabei beispielsweise nicht zur Bestimmung der weiteren Position verwendet. Stattdessen wird die Position einer als Festpunktgerät konfigurierten Messeinrichtung verwendet.

Die Positionsermittlung wird im Folgenden im Rahmen eines Verfahrens zum Erstellen eines Baustellen-Lokalisierungssystems mittels eines Vermessungssystems weiter Beschrieben.

Das Verfahren beginnt beispielsweise nachdem mindestens eine Messeinrichtung detektiert wurden, d.h. beispielsweise Information von dieser vorliegen.

Nach dem Start wird in einem Schritt 301 die erste Position x1 der ersten Messeinrichtung 121, die an der ersten tatsächlichen Position auf der Baustelle 150 positioniert wird, ermittelt.

Danach wird in einem Schritt 302 die zweite Position x2 der zweiten Messeinrichtung 122, die an der zweiten tatsächlichen Position auf der Baustelle 150 positioniert wird, ermittelt.

Die erste und die zweite tatsächliche Position sind dabei voneinander um den ersten tatsächlichen Abstand beabstandet.

Dann wird in einem Schritt 303 der erste Abstand a1 erfasst oder ermittelt.

In einem Fall wird der erste Abstand a1 insbesondere unter Berücksichtigung der Laufzeitsignale bezogen auf den ersten Abstand a1 ermittelt. Dazu wird beispielsweise ein UWB, Radar oder LIDAR basiertes Verfahren zur Laufzeitmessung verwendet.

Der erste Abstand a1 wird anschließend gespeichert.

Alternativ kann der erste tatsächliche Abstand auch, beispielsweise mittels eines Maßbands, gemessen werden und als erster Abstand a1 erfasst, d.h. beispielsweise mittels Benutzereingabe eingegeben werden.

Zudem wird in einem Schritt 304 die dritte Position x3 der dritten Messeinrichtung 123, die an einer dritten tatsächlichen Position auf der Baustelle 150 positioniert ist erfasst. Die dritte tatsächliche Position und die erste tatsächliche Position sind voneinander um den zweiten tatsächlichen Abstand beabstandet. Die dritte tatsächliche Position und die zweite tatsächliche Position sind voneinander um den dritten tatsächlichen Abstand beabstandet.

Der zweite Abstand a2 wird beispielsweise unter Berücksichtigung von Laufzeitsignalen bezogen auf den zweiten tatsächlichen Abstand ermittelt. Der dritte Abstand a3 wird beispielsweise unter Berücksichtigung von Laufzeitsignalen bezogen auf den dritten tatsächlichen Abstand ermittelt. Diese Abstände werden gespeichert.

Die dritte Position x3 wird unter Berücksichtigung des ermittelten zweiten Abstands a2 und des in ermittelten dritten Abstands a3 ermittelt. Im Beispiel sind die erste Messeinrichtung 121 an der ersten Position x1 und die zweite Messeinrichtung 122 an der zweiten Position x2 als Festpunktgeräte konfiguriert. Die dritte Messeinrichtung 123 ist an dritter Position X3 und als Rover konfiguriert.

Im Beispiel wird eine Messeinrichtung durch eine Abfrage in einem Schritt 305 aufgefordert, die Konfiguration mitzuteilen. Beispielsweise wird der Wert des Parameters in der jeweiligen Datenstruktur dadurch entsprechend gesetzt und gespeichert. Alternativ kann die Konfiguration eine Messeinrichtung durch Benutzereingabe erfolgen.

Alternativ kann vorgesehen sein, dass die Messeinrichtungen einen zusätzlichen Parameter automatisch übermitteln, der Information über ihre Konfiguration enthält. Dieser zusätzliche Parameter wird dann in Schritt 305 als der Parameter in der jeweiligen Datenstruktur empfangen und gespeichert.

Alternativ oder zusätzlich kann vorgesehen sein die absoluten Positionen der Messeinrichtungen, d.h. der Messeinrichtungen, beispielsweise aus den Daten des Satellitennavigationssystems zu ermitteln. Dazu ist vorgesehen, die absolute Position mittels der empfangenen Satellitensignale, insbesondere mittels des Global Positioning Systems, zu ermitteln.

Es kann vorgesehen sein, Information über den Höhenunterschied zwischen Messeinrichtungen zur Bestimmung der dritten Position x3 zu verwenden. In diesem Falle kann eine entsprechende Benutzereingabe vorgesehen sein.

Alternativ oder zusätzlich kann vorgesehen sein, alle möglichen dritten Positionen x3 zu bestimmen. In diesem Fall kann vorgesehen sein, eine Zuordnung der dritten Messeinrichtung zur dritten Position x3 durch eine Benutzereingabe aus allen möglichen Zuordnungen auszuwählen.

Die weiteren Positionen x4 weiterer Messeinrichtungen auf der Baustelle 150 werden durch Wiederholen der Schritte 304 bis 306 für die weitere Position x4 ermittelt. Dazu wird in einem Schritte 306 überprüft, ob ein Signal einer weiteren Messeinrichtung 124 empfangen wird, deren weitere Position x4 noch nicht ermittelt oder erfasst ist.

Wenn ein weiteres Signal empfangen wird, werden die Schritte 304 bis 306 für die weitere Position x4 anstelle der dritten Position x3 ausgeführt. Ansonsten endet das Verfahren, beispielsweise mit der Ausgabe des Ergebnisses der Positionen.

Vorteilhafterweise werden die weitere Position x4 unter Berücksichtigung der dritten Position x3 als Festpunkt ermittelt. Die in weiteren Abständen a4', a4'', a4''' zur weiteren Position x4 sind in Figur 1 dargestellt. Die weitere Position x4 wird vorteilhafterweise unter Berücksichtigung dieser Abstände zu den drei als Festpunktgerät konfigurierten drei Messeinrichtungen 121, 122, 123 ermittelt. Es können auch andere Kombinationen von Messeinrichtungen verwendet werden. Beispielsweise werden die erste und dritte Messeinrichtung oder die zweite und dritte Messeinrichtung als Festpunktgerät konfiguriert verwendet.

Vorteilhafterweise können beliebig viele weitere Positionen weiterer Messeinrichtungen durch diese Schritte ermittelt werden.

Vorzugsweise wird die Genauigkeit einer ermittelten Position durch Ringschlussmessung beispielsweise zur ersten Position x1 überprüft.

Vorzugsweise ist eine Ausgleichsrechnung zur Ermittlung mindestens einer Position vorgesehen.

Wenn die Position der dritten, als Rover konfigurierten, Messeinrichtung 123 oder der weiteren, als Rover konfigurierten, Messeinrichtung 124 ermittelt wurde, wird diese Messeinrichtung vorzugsweise als Festpunktgerät konfiguriert. In diesem Fall kann vorgesehen sein, den dazu in der jeweiligen Datenstruktur vorgesehene Parameter, nach der Ermittlung der Position, auf den entsprechenden Wert zu setzen.

Vorzugsweise wird eine Benutzerabfrage vorgesehen, die das setzten des Parameters auslöst.

Dies ermöglicht das Erstellen des Baustellen-Lokalisierungssystems mittels Vermessungssystems ohne weitere externe Raumbezüge und ohne weitere Gerätschaften.

Durch das Verfahren werden die Messeinrichtungen relativ zueinander eingemessen. Der Rover kann dabei ein Vermessungsgerät sein oder an einer Baumaschine angebracht sein.

Vorzugsweise werden zwei als Festpunktgeräte konfigurierte Messeinrichtungen 121, 122 auf Festpunkten aufgestellt. Die Festpunkte haben vorzugsweise einen externen Raumbezug oder sind Endpunkte einer Basislinie bekannter Länge. Beispielsweise werden zwei als Festpunktgeräte konfigurierte Messeinrichtungen 121, 122 auf der ersten Position x1 und der zweiten Position x2 aufgestellt.

Nachdem diese zwei Messeinrichtungen 121, 122 als Festpunktgeräte konfiguriert wurden wird das oben Beschriebene Verfahren zu Ermittlung der dritten Position x3 einer, als Rover konfigurierten, dritten Messeinrichtung 123 ausgeführt.

Anschließend wird diese, bisher als Rover konfigurierte, dritte Messeinrichtung 123 als Festpunktgerät konfiguriert und das Verfahren für weitere, als Rover konfigurierte, Messeinrichtungen 124 wiederholt.

Es kann auch vorgesehen sein, weitere Messeinrichtungen als Rover konfiguriert zu lassen. Dadurch können die Bewegungen einer Baumaschine genauer bestimmt oder mehrerer Baumaschinen verfolgt werden.

Vorzugsweise werden die symbolischen Darstellungen der Messeinrichtungen entsprechend der ermittelten Positionen und Abstände auf einem Bildschirm, beispielsweise des Tablet, oder in einer Nachricht an eine weitere Recheneinheit ausgegeben.

## Patentansprüche

1. Verfahren zum Erstellen eines Baustellen-Lokalisierungssystems mittels eines Vermessungssystems (100), umfassend folgende Schritte:
a.Betreiben einer ersten Messeinrichtung (121) und einer zweiten Messeinrichtung (122) in einem ersten Betriebsmodus, insbesondere konfiguriert als Festpunktgerät, und Betreiben einer dritten Messeinrichtung (123) in einem zweiten Betriebsmodus, insbesondere konfiguriert als Rover;
b.Empfang von Information über eine erste Position (x1) der ersten Messeinrichtung (121) ;
c.Empfang von Information über eine zweite Position (x2) der zweiten Messeinrichtung (122), wobei die erste Position (x1) und die zweite Position (x2) voneinander um einen ersten Abstand (a1) beabstandet sind;
d.Empfangen von Information über eine dritte Position (x3) der dritten Messeinrichtung (123), wobei die dritte Position (x3) und die erste Position (x1) voneinander um einen zweiten Abstand (a2) beabstandet sind, und die dritte Position (x3) und die zweite Position (x2) voneinander um einen dritten Abstand (a3) beabstandet sind;
e.Ermitteln des zweiten Abstands (a2) und Ermitteln des dritten Abstands (a3) unter Berücksichtigung der empfangenen Information;
f.Ermitteln der dritten Position (x3) unter Berücksichtigung des in Schritt e ermittelten zweiten Abstands (a2) und des in Schritt e ermittelten dritten Abstands (a3) und der ersten Position (x1) als Festpunkt und der zweiten Position (x2) als Festpunkt.

2. Verfahren nach Anspruch 1, wobei Information über den ersten Abstand (a1) erfasst wird, und die dritte Position abhängig vom ersten Abstand (a1) ermittelt wird.

3. Verfahren nach Anspruch 1, **dadurch gekennzeichnet, dass** die erste Position (x1) als absolute Position der ersten Messeinrichtung (121) oder die zweite Position (x2) als absolute Position der zweiten Messeinrichtung (122), insbesondere mittels empfangener Satellitensignale, insbesondere mittels des Global Positioning Systems, ermittelt wird.

4. Verfahren nach einem der vorherigen Ansprüche, **dadurch gekennzeichnet, dass** mindestens eine weitere Position (x4) mindestens einer weiteren Messeinrichtung (124) ermittelt wird, wobei die dritte Messeinrichtung (123) vom zweiten Betriebsmodus in den ersten Betriebsmodus geschaltet wird und die weiter Messeinrichtung (124) im zweiten Betriebsmodus betrieben wird.

5. Verfahren nach Anspruch 4, **dadurch gekennzeichnet, dass** die weitere Position (x4) unter Berücksichtigung der dritten Position (x3) als Festpunkt in weiteren Abständen (a4', a4'', a4''') zur weiteren Position (x4) ermittelt wird.

6. Verfahren nach einem der Ansprüche 4 oder 5, **dadurch gekennzeichnet, dass** die weitere Position (x4) unter Berücksichtigung mindestens dreier Festpositionen (x1, x2, x3) ermittelt wird.

7. Verfahren nach einem der vorhergehenden Ansprüche, **dadurch gekennzeichnet, dass** die Genauigkeit einer Ermittelten Position durch Ringschlussmessung überprüft wird.

8. Verfahren nach einem der vorherigen Ansprüche, **dadurch gekennzeichnet, dass** eine Ausgleichsrechnung zur Ermittlung mindestens einer Position vorgesehen sind.

9. Verfahren nach einem der vorherigen Ansprüche, **dadurch gekennzeichnet, dass** Information über die Position einer Messeinrichtung (121, 122, 123, 124), insbesondere auf einem Bildschirm oder in einer Nachricht ausgegeben wird.

10. Vorrichtung (110, 204) für ein Vermessungssystem (100), **dadurch gekennzeichnet, dass** die Vorrichtung (110, 204) ausgebildet ist das Verfahren nach einem der vorherigen Ansprüche durchzuführen.
